**Europäisches Patentamt**

**European Patent Office**

**Office européen des brevets**

(19)

(11) **EP 1 307 010 A1**

## (12) EUROPEAN PATENT APPLICATION

(43) Date of publication:
**02.05.2003 Bulletin 2003/18**

(51) Int Cl.$^7$: **H04L 12/56**

(21) Application number: **01402789.0**

(22) Date of filing: **26.10.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Castify Holdings, Ltd**
**London W4 4JK (GB)**

(72) Inventor: **Nonnenmacher, Jörg**
**06560 Valbonne (FR)**

(74) Representative: **Cabinet Hirsch**
**34, Rue de Bassano**
**75008 Paris (FR)**

(54) **A process for measuring distance in a packet network with a plurality of routers**

(57)     A process measures a distance from a source computer to a destination computer connected to a packet network with a plurality of routers. In the network, packets are provided with a parameter representative of the distance they may travel within the network; a packet is discarded when this parameter is reached and a message is sent to the computer from which a packet originates when a packet is discarded. In the source computer, a packet is sent, and the source computer determines whether the sent packet has reached its destination or not. According to this determination, another packet is sent with a parameter different from the parameter of the previous packet. Each time the parameter is changed through one iteration of an algorithm having a complexity less than $\log_2(n)$.

The invention makes it possible to measure the distance in a network, with a simple method, without loading the router, notably the routers near to the source computer.

Fig. 2

## Description

The invention relates to the field of computers, and to packet networks formed of a plurality of interconnected routers. One example of such a network is the Internet, which is a packet network working under the Internet Protocol.

More specifically, the invention relates measurement of distances between computers in a network where packets are provided with a parameter representative of the distance they may travel within the network, where a packet is discarded when this parameter is reached and where a message is sent to the computer from which a packet originates when this packet is discarded. The word "computer" is used here to identify a machine connected to a network for sending or receiving packets to and from the network. It should be understood that this functional definition does not exclude a "computer" being embodied within a machine acting as a router; this wording does not exclude a router being embodied in a type of machine usually called computer.

Internet Protocol packets (IP packets) carry a Time-To-Live (TTL) value to determine loops in the network path and to finally destroy packets after a certain time, instead of forwarding them forever, should a the packet be in a loop. The TTL is given as an integer between 0 to 255.

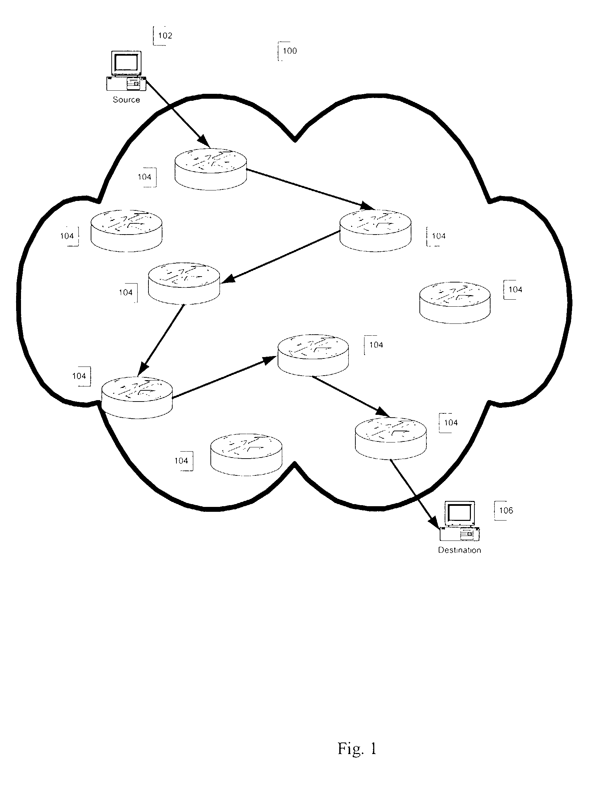

IP packets are sent from a source to a destination. Figure 1 depicts a schematic flow of IP packets from a source (102) to a destination (106) over the Internet (100). Within the Internet, Internet routers (104) are responsible to route an IP packet towards the destination. Internet protocol routers are networking elements that forward IP packets from an incoming network to an outgoing network. Before a router forwards an IP packet towards its destination, it decreases its TTL field. If the TTL reaches 0, the packet is discarded and an ICMP error packet is sent back to the source. Postel, J., "Internet Control Message Protocol", STD 5, RFC 792, USC/Information Sciences Institute, September 1981 is a description of the ICMP protocol; Braden R., Postel J., RFC 1009, "Requirements for Internet Gateways" defines how Internet gateways of IP-level routers must handle IP packets and their TTL values..

In a number of operating systems (e.g. Unix, Windows), there is provided a network debugging tool, called Traceroute. V. Jacobson. Traceroute Software. *Lawrence Berkeley Laboratories,* December, 1988 is a description of this tool. This network debugging tool examines the path of IP packets by sending an IP packet to the destination with an initial TTL value of 1. The first Internet router destroys this packet and sends an ICMP "time exceeded" error packet back to the source, which is received by the Traceroute program. Traceroute then sends a second IP packet with the TTL value of 2 causing an ICMP error message from the second router in the path. Traceroute continues sending IP packets to the destination with increasing TTL values by 1. When the destination is reached, a different message is sent back to Traceroute and the program terminates; the original traceroute implementation sends UDP IP packets to a port number unlikely to be accepted by the destination machine and thus causes an ICMP "port unreachable" message, if the destination is reached. So, Traceroute sends n packets towards the destination, if the destination has the distance of n hops from the traceroute source; n hops means that the IP packet transverses n routers on its way from the source to the destination.

Traceroute thus allows tracing the whole network path from the source to the destination and identifying all Internet routers in between the source and destination. However, Traceroute may also be used to measure the distance between a source and a destination. Traceroute uses a linear number of packets to discover the distance of the destination in Internet hops, at the same time it determines the network path. It should also be noted that actually most Traceroute implementations only measure up to 30 hops in standard settings; this is representative of the fact that the distance in the Internet is usually shorter that 32 hops.

However, one problem with Traceroute is that it generates ICMP error packets, especially for the routers near to the source. This puts additional load to the routers. Thus, there is a need for a method for measuring distances in a packet network with a plurality of routers, that would not create excessive load on the routers.

D. E. Knuth. *Optimum binary search trees.* Acta Informatica, 1:14--25, 1971 is a description of algorithms used for searches in trees. In the context of algorithms, complexity is a measurement of the efficiency of an algorithm, e.g. of the capacity of an algorithm for solving a problem within a maximal number of iterations in relation to the input value. For instance, Traceroute, as explained above, has a linear complexity : the number of iterations of the algorithm for reaching a destination which is n hops away is equivalent to n. A binary search tree algorithm has a complexity of $\log_2(n)$— that is it finds an item among n sorted items in about $\log_2(n)$ iterations or steps.

The invention provides a process for measuring distance from a source computer to a destination computer connected to a packet network with a plurality of routers, wherein packets are provided with a parameter representative of the distance they may travel within the network, wherein a packet is discarded when this parameter is reached and wherein a message is sent to the computer from which a packet originates when this packet is discarded. The process comprises, in the source computer, the steps of

    (a) setting a number to a predetermined value;
    (b) sending to the destination computer a packet having said number as said parameter;
    (c) waiting for a message indicating whether the packet sent was discarded,

(d) according to the results of the waiting step, changing the number and

(e) repeating the steps of (b) sending, (c) waiting and (d) changing.

The step of changing is carried out through one iteration of an algorithm having a complexity less than $\log_2(n)$. In one embodiment of the process, the step of (d) changing comprises:

- increasing said number if it is determined in step (c) that the packet was discarded by a router;
- lowering said number if it is determined in step (c) that the packet has reached the destination computer.

The steps may be repeated until the algorithm converges. One may also include, in the destination computer, the step of sending a message to the source computer when a packet is received. In this case, the step (c) of waiting may comprises waiting for :

- a message indicating that the packet sent was discarded by a router or
- a message from the destination computer indicating that the packet was received.

The step (c) of waiting may then comprise, if no message is received within a predetermined time period, resending a packet having the same number as the previously sent packet as said parameter.

In one embodiment, the predetermined value is selected as the mean distance expected between said source computer and said destination computer. The algorithm may notably be :

- a binary search algorithm;
- a binary search algorithm optimized according to the expected distribution of distances.

The process may be implemented in an IP network, the parameter being the TTL value.

The invention further relates to a computer program product embodied in a computer-readable medium for measuring distance from a source computer to a destination computer connected to a packet network with a plurality of routers, wherein packets are provided with a parameter representative of the distance they may travel within the network, wherein a packet is discarded when this parameter is reached and wherein a message is sent to the computer from which a packet originates when this packet is discarded. The computer program product comprises :

(a) computer readable program code means for setting a number to a predetermined value;

(b) computer readable program code means for sending to the destination computer a packet having said number as said parameter,

(c) computer readable program code means for waiting for a message indicating whether the packet sent was discarded,

(d) computer readable program code means for changing the number according to the results of the waiting step, and

(e) computer readable program code means for sending a packet having the changed number as said parameter;

(f) computer readable program code means for repeating the steps of (c) waiting, (d) changing and (e) sending

The computer readable program code means for changing carry out each change of the number through one iteration of an algorithm having a complexity less than $\log_2(n)$.

Other features of the invention appear from the consideration of the following description, in reference to the drawing, where :

- figure 1 is a schematic view of a network where the invention may be carried out;
- figure 2 is a flowchart of a process according to the invention.

In the rest of this description, the invention is described in reference to the Internet. It will however be clear to the person skilled in the art that the invention may be implemented in other packet networks.

The invention proposes to determine a distance between a source computer to a destination computer, in a packet network. In the packet network, packets are provided with a parameter representative of the distance they may travel within the network; this parameter is typically representative of the number of hops they may travel, like the TTL parameter of the Internet packets. A packet is discarded when this parameter is reached; if a packet is discarded, a message is sent to the computer from which the packet originates. This makes it possible for the computer sending the message to know that the message was discarded before reaching its destination.

For determining the distance, the source computer first selects a predetermined value, and sets a number to this predetermined value. It then sends to the destination computer a packet having said number as said parameter; this means that the packet sent may travel toward the destination computer, without reaching the destination computer, if the distance between the source computer and the destination computer is higher than the parameter.

The source computer then waits for a message indicating whether the packet sent was discarded; if such a message is received, this means that the packet did not reach its destination. In an embodiment where the destination computer sends an acknowledgement of receipt, the fact that no message is received is representative that the packet that was sent was lost. The source computer may then send another packet, with the same parameter. Alternatively, the destination computer may not respond when a packet is received. Lack of response would then be interpreted as an indication that the packet was received.

In the next step, according to the results of the waiting step, the number is changed. Thus, for the next packet that will be sent, the number will be different from the number of the previous packet.

The steps of sending, waiting and changing are then repeated, until the required information regarding distance is obtained.

According to the invention, the number is changed through one iteration of an algorithm having a complexity equal or less than $\log_2(n)$; in the example given below, the algorithm is a binary search tree algorithm. In other words, instead of increasing the parameter by one hop each time a new packet is sent, as in the Traceroute method, the invention uses an algorithm having a lower complexity. This makes it possible to determine the distance in a lower number of iterations, that is by sending a smaller number of packets.

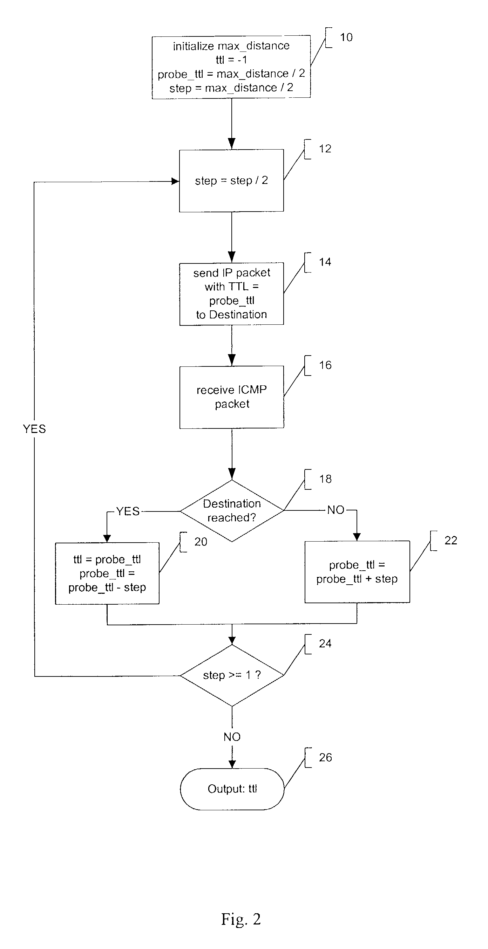

Figure 2 shows a flowchart of an embodiment of the invention, in which a binary search tree algorithm is used. The binary search tree algorithm can be used, because the distances (TTL values) provide a natural order. In the embodiment of figure 2, routers send an ICMP "time exceeded" packet each time they discard a packet, but the destination computer also returns an ICMP packet if it receives a packet from the source computer. This may for instance be obtained by addressing the packets to a port of the destination computer which is not opened for listening, thus generating "port unreachable" ICMP error messages. The process of figure 2 carried out in the source computer.

In the initialization step 10, the search universe is initialized (max_distance), using the maximum TTL that should be searched; this value is in the form 2^k, with k an integer, to ensure a simpler operation of the process. For instance, this maximum value may be 32, since a path from a source to a destination in the Internet today is nearly always shorter than 32 hops. This may be changed in view of the maximum distance to be searched. Additionally the tt1 variable is initialized with a value that is not possible - as example: -1.

There are then defined a probe_tt1 variable and a step variable. The probe_tt1 variable is used in the rest of the process for setting the TTL value of the packets sent by the source computer. The step variable is used for incrementing or decrementing the probe_tt1 variable in each loop through the program. In step 10, the probe_tt1 and the step variables are set to half of the maximum value. For instance, for a maximum distance of 32, the probe_tt1 and the step variables are set to 16.

After this step, the process proceeds to the first step 12 within a loop. In step 12, the step value is halved. For instance, for a step value of 16 in step 10, the step value is now set to 8.

In step 14, an IP packet is sent to the destination with a TTL value of probe_tt1 (16 in the example). After sending of the IP packet, the source computer awaits an ICMP packet, in step 16.

In step 18, the ICMP packet received in step 16 is tested to determine whether the packet sent in step 14 by the source computer reached its destination. If this is the case, the process branches to step 20, else it branches to step 22.

In step 20, it is ascertained that the packet sent with the probe_tt1 TTL value reached the destination. This means that the distance to the destination computer is higher or equal than probe_tt1, so that the following packet should be sent with a lower value. The corresponding distance — probe_tt1 — is stored in the tt1 variable. Then, the probe_tt1 variable is decremented by the amount stored in the step variable, that is

$$probe\_tt1 = probe\_tt1 - step$$

In the proposed example, probe_tt1 becomes 8.

In step 22, it is determined that the destination was not reached. Thus, the tt1 variable is not changed, and the probe_tt1 is incremented by the amount stored in the step variable, that is .

$$probe\_tt1 = probe\_tt1 + step$$

After step 20 or 22, the process proceeds to step 24. In this step, it is ascertained whether the value of the step variable is higher than one or equal to one. If this is the case, the process proceeds again to step 12 for another loop. Else, the process proceeds to step 26, where the value of tt1 is output

As one may understand from this description, the process loops through steps 12, 14, 16, 18, 20 or 22 and 24, until the value of step is smaller than one. At this time, the value of tt1 is representative of the distance between the source computer and the destination computer. For instance, assume the distance is 11. The values of the probe_tt1 and step and tt1 variables in step 24 of the successive loops are the following.

| Loop n° | Probe_tt1 | Step | Ttl |
|---------|-----------|------|-----|
| 1 | 8 | 8 | 16 |
| 2 | 12 | 4 | 16 |
| 3 | 10 | 2 | 12 |
| 4 | 11 | 1 | 12 |
| 5 | 10.5 | 0.5 | 11 |

The process is terminated after 5 loops through steps 12 to 24. Since the value of step is divided by two in each loop, the duration of the process is $O(\log_2(\text{max\_distance}))$, with max_distance the maximum distance to be searched.

The loop is terminated, when step is smaller than 1. Otherwise the loop continues with step 12.

In step 26, the process returns the tt1 value of the last IP packet that reached the destination, or the intitialization value of tt1, which indicates that the destination was not reached within the search universe.

A path from a source to a destination in the Internet today is nearly always shorter than 32 hops (actually also most traceroute implementations only measure up to 30 hops in standard settings); the average is about 15 to 17 hops. Assuming the average distance is 15 between sources and destinations and the search space is 32, the invented method performs 3 times faster and uses 3 times less bandwidth than traceroute.

Generating ICMP packets puts additional load to a router, as discussed above. The invented method has the additional advantage that routers near the source are not excessively loaded by frequent measurements to different destinations, since the ICMP packets are generated by routers far behind the source network.

The process disclosed in figure 2 may be varied in a number of ways, some of which are examplified here. The process may be extended to also return the time (round-trip time, RTT) an IP packet needs to reach the destination and to return. The RTT is measured by the delay between sending the probe packet and receiving the ICMP packet.

If measurements to the same destinations occur regularly, the algorithm can be extended to first send a packet with the TTL of the last measurement and, if the destination was reached to measure with a by one decreased TTL. If the second packet does not reach the destination, the distance between the source and the destination is unchanged. This is useful for frequent measurements, since most Internet routes do not change during short time intervals (days or weeks). However, due to the complexity and dynamism of the Internet always some routes change within a time interval.

The described process can be extended to return the distance to the last Internet router that answers with an ICMP packet instead of returning an error code, if the destination is not reachable or ICMP packets are blocked by a network. This is useful, if not the exact distance from a source to a destination is needed, but an approximation, especially if the destination is taken as a representative for a larger group of destinations.

The described invention converges in logarithmic time, because the search space is split into half with each loop cycle. To split the search space no assumptions about the distribution of the distances is made. If the discrete distribution was known, the algorithm could be optimized. An optimization could be the following. Instead of splitting the remaining search space into two blocks containing an equal number of distances to search, the remaining search space could be split into two blocks so that both blocks contain nearly the same number of hosts with this distance from the source. As example: If the distribution would be that 50% of the destination computers would have a distance of 20 or less from the source and the other 50% would have a distance of 21 or more the search algorithm sends a probe packet with the TTL of 20. This process is the applied on the remainder, until the algorithm converges. Since the distribution is discreet it is very unlikely to find a 50/50 split, but the split would take the nearest possible split for integer values.

In the flowchart of figure 2, one may also stop before the algorithm converges : one may simply wish to check an interval of distances for the distant computer. This may be carried out simply by changing the comparison value in step 24. For instance, if this comparison value were set to 8, the process would stop as soon as the value of step becomes 4. The distance would then be comprised in the interval

[tt1; tt1 — step]

Thus, in the example given in the table above, the algorithm would stop after the second loop, and provide in step 26 a value of 12 for the tt1 variable and a value of 8 for tt1 - step. The distance of 11 is indeed in the interval [8; 12].

In the flowchart of figure 2, an ICMP message is expected in each loop - be it received from a router discarding the message or from the destination computer. As discussed above, one may also simply rely on the presence or absence of an ICMP message. This makes the process less resistant to packet losses, but does not require that the destination computer issues ICMP messages. The process proposed in figure 2 makes it possible to resend a packet if no answer in received in step 18 — even though this is not represented in figure 2.

One may also change the value of the maximum distance set in step 10. Again, since the complexity of the algorithm is of logarithmic complexity, one may select a maximum distance much higher than the prior art value of 30, and still measure distance within a reasonable time period. One may also simply select the value of the maximum distance to twice the expected mean distance; thus, the first packet to be sent is sent with a TTL corresponding to the mean distance.

In the example of figure 2, a maximum value of the form 2^k was selected, for the easiness of explanation. One may select another value — but this would involve paying more attention to integer or decimal values.

**Claims**

**1.** A process for measuring distance from a source computer (102) to a destination computer (106) connected to a packet network (100) with a plurality of routers (104),

wherein packets are provided with a parameter representative of the distance they may travel within the network, wherein a packet is discarded when this parameter is reached and wherein a message is sent to the computer from which a packet originates when this packet is discarded, the process comprising, in the source computer, the steps of

(a) setting a number to a predetermined value;
(b) sending (14) to the destination computer a packet having said number as said parameter,
(c) waiting (16, 18) for a message indicating whether the packet sent was discarded,
(d) according to the results of the waiting step, changing (20, 22) the number and
(e) repeating the steps of (b) sending, (c) waiting and (d) changing

wherein the step of changing is carried out through one iteration of an algorithm having a complexity less than $\log_2(n)$.

2. The process of claim 1, wherein the step of (d) changing comprises:

- increasing said number if it is determined in step (c) that the packet was discarded by a router (104);
- lowering said number if it is determined in step (c) that the packet has reached the destination computer (106).

3. The process of claim 1 or 2, wherein said steps are repeated until the algorithm converges.

4. The process of one of claims 1 to 3, further comprising, in the destination computer (106), the step of sending a message to the source computer when a packet is received.

5. The process of claim 4, wherein the step (c) of waiting comprises waiting (16) for :

- a message indicating that the packet sent was discarded by a router or
- a message from the destination computer (106) indicating that the packet was received.

6. The process of claim 5, wherein the step (c) of waiting comprises, if no message is received within a predetermined time period, resending a packet having the same number as the previously sent packet as said parameter.

7. The process of one of claims 1 to 6, wherein said predetermined value is selected as the mean distance expected between said source computer and said destination computer.

8. The process of one of claims 1 to 7, wherein the algorithm is a binary search algorithm.

9. The process of one of claims 1 to 8, wherein the algorithm is a binary search algorithm optimized according to the expected distribution of distances.

10. The process of one of claims 1 to 9, wherein the network is an IP network, and wherein said parameter is the TTL value.

11. A computer program product embodied in a computer-readable medium for measuring distance from a source computer to a destination computer connected to a packet network with a plurality of routers, wherein packets are provided with a parameter representative of the distance they may travel within the network, wherein a packet is discarded when this parameter is reached and wherein a message is sent to the computer from which a packet originates when this packet is discarded, the computer program product comprising

(a) computer readable program code means for setting a number to a predetermined value;
(b) computer readable program code means for sending to the destination computer a packet having said number as said parameter,
(c) computer readable program code means for waiting for a message indicating whether the packet sent was discarded,
(d) computer readable program code means for changing the number according to the results of the waiting step, and
(e) computer readable program code means for sending a packet having the changed number as said parameter;
(f) computer readable program code means for repeating the steps of (c) waiting, (d) changing and (e) sending

wherein the computer readable program code means for changing carry out each change of the number through one iteration of an algorithm having a complexity less than $\log_2(n)$.

Fig. 1

Fig. 2

**EP 1 307 010 A1**

**European Patent Office**

**EUROPEAN SEARCH REPORT**

**Application Number**

EP 01 40 2789

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | GUYTON J D ET AL: "LOCATING NEARBY COPIES OF REPLICATED INTERNET SERVERS" COMPUTER COMMUNICATIONS REVIEW, ASSOCIATION FOR COMPUTING MACHINERY. NEW YORK, US, vol. 25, no. 4, 1 October 1995 (1995-10-01), pages 288-298, XP000541664 ISSN: 0146-4833 Chapter 4 * page 290, right-hand column – page 291, left-hand column * | 1-10 | H04L12/56 |
| Y | STEVENS W R: "TRACEROUTE PROGRAM" TCP/IP ILLUSTRATED. VOL. 1: THE PROTOCOLS, PROFESSIONAL COMPUTING SERIES, READING, MA: ADDISON WESLEY, US, vol. 1, 1994, pages 97-110, XP002134685 ISBN: 0-201-63346-9 * the whole document * | 1-10 | |
| A | US 6 192 404 B1 (CHIU DAH MING ET AL) 20 February 2001 (2001-02-20) * column 9, line 40 – column 11, line 55 * | 1-10 | TECHNICAL FIELDS SEARCHED (Int.Cl.7) H04L |

The present search report has been drawn up for all claims

| Place of search | Date of completion of the search | Examiner |
|---|---|---|
| MUNICH | 11 April 2002 | Megalou, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 40 2789

This annex lists the patent family members relating to the patent documents cited in the above–mentioned European search report.
The members are as contained in the European Patent Office EDP file on
The European Patent Office is in no way liable for these particulars which are merely given for the purpose of information.

11–04–2002

| Patent document cited in search report | Publication date | Patent family member(s) | Publication date |
|---|---|---|---|
| US 6192404 B1 | 20–02–2001 | AU 3993599 A<br>EP 1078499 A1<br>WO 9959304 A1 | 29–11–1999<br>28–02–2001<br>18–11–1999 |

EPO FORM P0459

For more details about this annex : see Official Journal of the European Patent Office, No. 12/82